## Europäisches Patentamt
## European Patent Office
## Office européen des brevets

(11) Publication number: **0 049 344**
**B1**

(12)

# EUROPEAN PATENT SPECIFICATION

(45) Date of publication of patent specification: **18.12.85**

(51) Int. Cl.⁴: **G 01 L 9/00, G 01 L 9/12, H 01 L 29/84**

(21) Application number: **81106255.3**

(22) Date of filing: **11.08.81**

(54) **Capacitive pressure transducers and methods of fabricating them.**

(30) Priority: **03.10.80 US 193860**

(43) Date of publication of application:
**14.04.82 Bulletin 82/15**

(45) Publication of the grant of the patent:
**18.12.85 Bulletin 85/51**

(84) Designated Contracting States:
**DE FR GB**

(56) References cited:
**US-A-3 858 150**
**US-A-3 994 009**
**US-A-4 203 128**

(73) Proprietor: **International Business Machines Corporation**
**Old Orchard Road**
**Armonk, N.Y. 10504 (US)**

(72) Inventor: **Petersen, Kurt Edward**
**6244 Solomon Court**
**San Jose California 95123 (US)**

(74) Representative: **Hobbs, Francis John**
**IBM United Kingdom Patent Operations Hursley Park**
**Winchester, Hants, SO21 2JN (GB)**

Courier Press, Leamington Spa, England.

## Description

This invention relates to capacitive pressure transducers and to methods for fabricating such transducers.

Numerous pressure sensing transducers are available to the artisan. The widespread use of integrated circuitry has met with less than satisfactory pressure transducers for use in integrated circuits. Thus there is a need for a pressure transducer that is readily integrable with Metal Oxide Silicon (MOS) circuitry. Prior art piezoresistive pressure sensitive devices have been tried, but have not provided the substantially necessary amplitude of signal for ready detection and processing. Their sensitivity to ambient temperature variations has been a problem. In addition, the fabrication of these transducers has been critical and difficult to control.

US—A—4,203,128 discloses a capacitive pressure transducer comprising an electrically conductive silicon diaphragm formed in a layer of silicon and a metallic membrane supported in spaced relation to the silicon diaphragm. The transducer is fabricated by a method quite different from that which forms an aspect of the present invention.

According to one aspect of the invention, a capacitive pressure transducer comprising an electrically conductive diaphragm of semiconductor material surrounded and supported by a body of semiconductor material, a perforated electrically conductive membrane so supported that it is spaced from the diaphragm to form a hollow between the membrane and the diaphragm, the diaphragm and the membrane respectively serving as the movable plate and the fixed plate of a capacitor, the capacitance of which varies in dependence on the pressures on opposite sides of the diaphragm, is characterised in that the membrane is supported on an external surface of the body of semiconductor material, that the diaphragm is formed of semiconductor material of opposite conductivity to that of the body and in that an electrical connection is provided through the body of semiconductor material from the diaphragm to said external surface of the body.

According to another aspect of the invention, a method for fabricating a capacitive pressure transducer comprises the successive steps of:

(1) doping a portion of a semiconductor substrate of one conductivity type material with material of the opposite conductivity type in a region in which the transducer is to be formed;

(2) growing an epitaxial layer of semiconductor material of said one conductivity type over said substrate to provide a structure in which the doped portion is a buried layer;

(3) processing said structure for making an electric connection between said buried layer and the outside surface of said epitaxial layer;

(4) depositing an insulating layer on each of the outside surfaces of said structure in the region in which the transducer is to be formed;

(5) depositing a layer of metal over the insulating layer which is contiguous with said epitaxial layer;

(6) etching a plurality of apertures through the metal layer and the insulating layer beneath it in the region where said transducer is to be formed;

(7) etching through the insulating layer on the opposite side of the structure to the metal layer to define the extent of said transducer; and

(8) etching the structure in an etchant for removing semiconductor material from said epitaxial layer in the region of said apertures and from said substrate in the region defined by the etched-through portion of the insulating layer on the side of the structure opposite to the metal layer to leave a diaphragm constituted by the material of the formerly buried layer.

How the invention can be carried out will now be described by way of example only, with reference to the accompanying drawings, in which:

FIGS. 1A through 1F are schematic diagrams of a cross-section of a pressure transducer according to the invention as it evolves during fabrication; and

FIG. 2 is a portion of a plan view of a pressure transducer according to the invention.

A pressure transducer according to the invention may be made as a unitary device, but preferably it will be made as part of an integrated circuit structure, the circuitry of which utilizes the variation in capacitance of the transducer in operation. The preferred transducer is therefore an integrated structure resulting from the process described hereinafter.

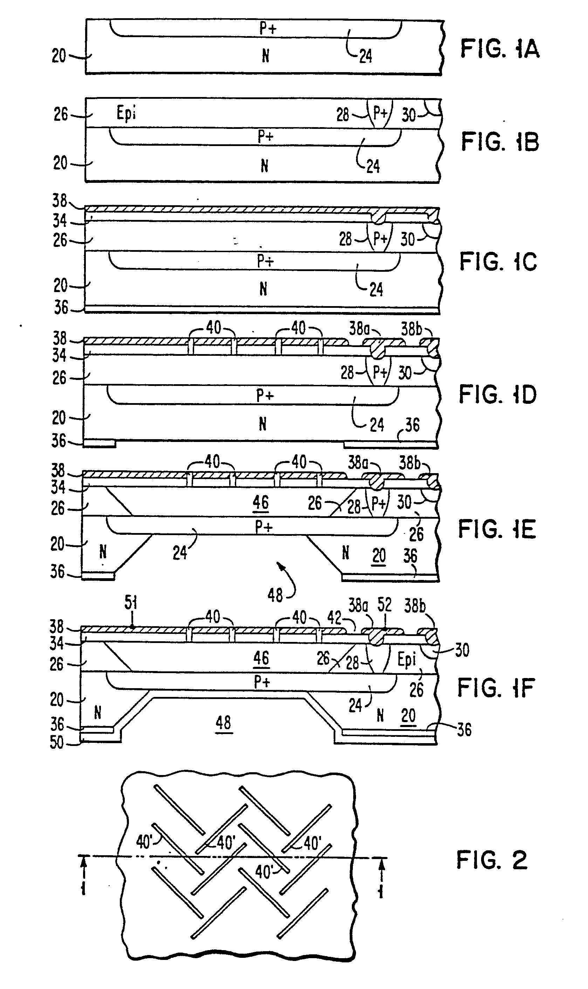

In this process, an initial step, usually performed by a vendor, is the production of a semiconductor wafer or substrate 20 (FIG. 1A) with the major surfaces lying substantially in the (100) plane. The semiconductor crystalline structure then has internal (111) planes at a convenient angle with respect to the (100) planes, for example, in crystalline silicon, at an angle of 54°7. The reason for this will become more apparent as the specification progresses, but at this time it is helpful to understand that if a suitable anisotropic etchant is used, pyramidal cavities can be etched in the semiconductor substrate 20. An anisotropic etchant works much more normally to the (100) plane than it does laterally or parallel to the (100) plane and thus it works very much less at the (111) plane. Hence, the action of the etchant leaves pyramidal surfaces. The substrate 20 shown here as n-type silicon with the upper and lower surfaces lying in the (100) plane, is heavily doped, with boron for example, in the region or area where the pressure transducer is eventually to be located, resulting in a diffused layer 24 of p+ material. Next, an epitaxial layer 26 (FIG. 1B) is grown over the substrate 20 and the layer 24 resulting in burial of the layer 24.

The structure is now ready for processing according to conventional methods for integrated circuitry. At this time the p+ material is diffused into the epitaxial layer 26 outside the area of the transducer and at a point convenient to the integrated circuitry utilizing the transducer to provide an electrical connection 28 to the p+ buried layer 24. An element 30 of integrated circuitry is indicated. Those skilled in the art will proceed in known manner.

A layer 34 (FIG. 1C) and another layer 36 of insulating material, preferably silicon nitride ($Si_3N_4$), is deposited to a depth of about 5000 Å on the obverse and the reverse of the structure of FIG. 1B and a metallization layer 38 is then deposited over the insulating layer 34. During this same step, metallization deposits 38a and 38b are laid for the integrated circuit connections.

As shown in FIG. 1D, the structure is next etched on the reverse to remove part of the insulating material 36. Preferably this material is etched away in a large square encompassing the limits of the transducer to come; alternatively, it could be of another shape, such as circular, rectangular or oval. Apertures 40 are etched through the metallization layer 38 and the insulating layer 34 on the obverse. These apertures preferably are slit as shown in the plan view of FIG. 2. The holes as seen in FIG. 1D are shown as viewed along the chain line 1—1 in FIG. 2. Alternatively these holes can be circular or square in shape.

The structure is then subjected to an etchant, preferably an anisotropic etchant for example an anisotropic etchant ethylene diamine and pyrcatechol (known as the acronym EDP), which reacts only with the silicon and etches away that material on both sides of the (formerly) buried layer 24 to leave a portion of it as a diaphragm between two frustro-pyramidal cavities 46 and 48 having lateral surfaces in the (111) planes. The insulating silicon nitride layers are in tension when deposited on silicon. Therefore the metallized insulating membrane 38—34 over the cavity 46 is taut and relatively large windows (1 mm × 1 mm) are possible.

A passivating layer 50 is coated on the reverse of the structure as shown in FIG. 1E; glass is suitable for some applications, but tough yet yielding plastic material is used where glass is too brittle to serve. Electric leads 51 and 52 are added in form suitable for the application.

The diaphragm portion of the layer 24 and the metallic layer 38 form a capacitor which is variable due to the flexibility of the diaphragm portion. Reference pressure enters the apertures 40 to the cavity 46, and the cavity 48 is coupled to the source of pressure to be measured. For example, the obverse, or circuit side of the structure is packaged in an evacuated header, and the atmospheric pressure on the reverse of the structure in cavity 48 will cause the diaphragm 24 to deform and change the value of the capacitor, which change is then sensed by the arrangement of the "on chip" circuitry.

**Claims**

1. A capacitive pressure transducer comprising an electrically conductive diaphragm (24) of semiconductor material surrounded and supported by a body (20, 26) of semiconductor material, a perforated electrically conductive membrane (38) so supported that it is spaced from the diaphragm to form a hollow (46) between the membrane and the diaphragm, the diaphragm and the membrane respectively serving as the movable plate and the fixed plate of a capacitor, the capacitance of which varies in dependence on the pressures on opposite sides of the diaphragm, characterised in that the membrane is supported on an external surface of the body of semiconductor material, that the diaphragm (24) is formed of semiconductor material of opposite conductivity to that of the body (20) and in that an electrical connection (28) is provided through the body of semiconductor material from the diaphragm (24) to said external surface of the body.

2. A capacitive pressure transducer as claimed in claim 1, in which the diaphragm (24) and the membrane (38) are electrically connected to circuitry integrated in the semiconductor body (20, 26), the circuitry being responsive to changes in the capacitance of said capacitor.

3. A transducer as claimed in claim 1 or claim 2, in which the diaphragm (24) is contiguous with the body (20, 26), and in which the conductive membrane (38) is metallic and insulated from the body.

4. A method for fabricating a capacitive pressure transducer comprising the successive steps of:

(1) doping a portion (24) of a semiconductor substrate (20) of one conductivity type material with material of the opposite conductivity type in a region in which the transducer is to be formed;

(2) growing an epitaxial layer (26) of semiconductor material of said one conductivity type over said substrate (20) to provide a structure in which the doped portion (24) is a buried layer;

(3) processing said structure for making an electric connection (28) between said buried layer (24) and the outside surface of said epitaxial layer (26);

(4) depositing an insulating layer (34, 36) on each of the outside surfaces of said structure in the region in which the transducer is to be formed;

(5) depositing a layer of metal (38) over the insulating layer (34) which is contiguous with said epitaxial layer (26);

(6) etching a plurality of apertures (40) through the metal layer (38) and the insulating layer (34) beneath it in the region where said transducer is to be formed;

(7) etching through the insulating layer (36) on the opposite side of the structure to the metal layer (38) to define the extent of said transducer; and

(8) etching the structure in an etchant for removing semiconductor material from said epitaxial layer (26) in the region of said apertures (40) and from said substrate (20) in the region defined by the etched-through portion of the insulating layer (36) on the side of the structure opposite to the metal layer (38) to leave a diaphragm constituted by the material of the formerly buried layer (24).

5. A method as claimed in claim 4, in which said substrate (20) consists of n-type silicon.

6. A method as claimed in claim 5, in which the n-type silicon substrate (20) has a major surface lying in the (100) plane; in which said portion (24) of the substrate is doped with boron; in which the insulating layers (34, 36) consist of silicon nitride; in which an anisotropic etchant is used in step (8); and in which the substrate side of said structure is subsequently protected by a passivating insulating layer (50).

7. A method as claimed in any of claims 4 to 6, further comprising forming other semiconductor devices in said substrate (20) to produce an integrated circuit in which the capacitive pressure transducer is integrated.

## Patentansprüche

1. Kapazitiver Druckwandler mit einem von einem Körper (20, 26) aus Halbleitermaterial umgebenen und gehaltenen elektrisch leitenden Diaphragma (24) aus Halbleitermaterial, einer perforierten elektrisch leitenden Membran (38), welche so gehalten ist, daß sie unter Ausbildung eines Hohlraums (46) zwischen der Membran und dem Diaphragma im Abstand zum Diaphragma liegt, wobei das Diaphragma und die Membran als bewegliche Platte bzw. feste Platte eines Kondensators dienen, dessen Kapazität in Abhängigkeit vom Druck auf entgegengesetzte Seiten des Diaphragmas variiert, dadurch gekennzeichnet, daß die Membran auf einer Außenfläche des Körpers aus Halbleitermaterial gehalten wird, daß das Diaphragma (24) aus Halbleitermaterial mit zu derjenigen des Körpers (20) entgegengesetzter Leitfähigkeit ausgebildet ist und daß eine elektrische Verbindung (28) von Diaphragma (24) durch den Körper aus Halbleitermaterial zur Außenfläche des Körpers vorgesehen ist.

2. Kapazitiver Druckwandler nach Anspruch 1, bei welchem das Diaphragma (24) und die Membran (38) mit einem im Halbleiterkörper (20, 26) integrierten Schaltungsaufbau elektrisch verbunden sind, wobei der Schaltungsaufbau auf Änderungen der Kapazität des Kondensators anspricht.

3. Wandler nach Anspruch 1 oder Anspruch 2, bei welchem das Diaphragma (24) an den Körper (20, 26) angrenzt, und bei welchem die leitende Membran (38) metallisch und vom Körper isoliert ist.

4. Verfahren zur Herstellung eines kapazitiven Druckwandlers, welches folgende Verfahrensschritte umfaßt:

(1) Dotieren eines Abschnitts (24) eines Halbleitersubstrats (20) eines Materials eines bestimmten Leitungstyps mit einem Material des entgegengesetzten Leitungstyps in einem Bereich, in welchem der Wandler auszubilden ist;

(2) Aufwachsen einer epitaxialen Schicht (26) aus Halbleitermaterial des einen Leitungstyps über dem Substrat (20) zur Schaffung eines Aufbaus, in welchem der dotierte Abschnitt (24) eine begrabene Schicht ist;

(3) Behandeln des Aufbaus zur Herstellung einer elektrischen Verbindung (28) zwischen der begrabenen Schicht (24) und der Außenfläche der epitaxialen Schicht (26);

(4) Abscheiden einer isolierenden Schicht (34, 36) auf jeder der Außenflächen des Aufbaus in dem Bereich, in welchem der Wandler auszubilden ist;

(5) Abscheiden einer Schicht aus Metall (38) über der isolierenden Schicht (34), welche an die epitaxiale Schicht (26) angrenzt;

(6) Ätzen einer Anzahl von Löchern (40) durch die Metallschicht (38) und die darunterliegende isolierende Schicht (34) in dem Bereich, wo der Wandler auszubilden ist;

(7) Durchätzen der isolierenden Schicht (36) auf der der Metallschicht (38) entgegengesetzten Seite des Aufbaus zur Bestimmung der Ausdehnung des Wandlers; und

(8) Ätzen des Aufbaus in einem Ätzmittel zur Entfernung von Halbleitermaterial von der epitaxialen Schicht (26) im Bereich der Öffnungen (40) und vom Substrat (20) in dem durch den durchgeätzten Abschnitt der isolierenden Schicht (36) auf der der Metallschicht (38) entgegengesetzten Seite des Aufbaus bestimmten Bereich derart, daß ein durch das Material der früher begrabenen Schicht (24) gebildetes Diaphragma stehenbleibt.

5. Verfahren nach Anspruch 4, bei welchem das Substrat (20) aus n-Silizium besteht.

6. Verfahren nach Anspruch 5, bei welchem das n-Siliziumsubstrat (20) eine in der (100)-Ebene liegende Hauptfläche aufweist; bei welchem der Abschnitt (24) des Substrats mit Bor dotiert ist; bei welchem die isolierenden Schichten (34, 36) aus Siliziumnitrid bestehen; bei welchem ein anisotropes Ätzmittel im Schritt (8) verwendet wird; und bei welchem die Substratseite des Aufbaus nachfolgend durch eine pasivierende Isolationsschicht (50) geschützt wird.

7. Verfahren nach irgendeinem der Ansprüche 4 bis 6, welches ferner das Ausbilden von anderen Halbleitervorrichtungen in dem Substrat (20) zur Ausbildung einer integrierten Schaltung, in welcher der kapazitive Druckwandler integriert ist, umfaßt.

## Revendications

1. Transducteur de pression capacitif comprenant un diaphragme électriquement conducteur (24) en un matériau semiconducteur entouré et supporté par un corps (20, 26) de matériau semiconducteur, une membrane perforée électriquement conductrice (38) soutenue de façon qu'elle est espacée du diaphragme pour former une cavité (46) entre la membrane et le diaphragme, le diaphragme et la membrane servant respectivement de plaque mobile et de plaque fixe d'un condensateur dont la capacité varie selon les pressions sur les faces opposées du diaphragme, caractérisé en ce que la membrane est portée par une surface externe du corps de matériau semiconducteur, et en ce que le diaphragme (24) est constitué d'un matériau semiconducteur de type de conductivité opposé à celui du corps (20), et en ce qu'une connexion électrique (28) est assurée à travers le corps de matériau semiconducteur depuis le diaphragme (24) jusqu'à la surface externe du corps.

2. Transducteur de pression capacitif selon la revendication 1, caractérisé en ce que le diaphragme (24) et la membrane (38) sont électriquement connectés au circuit intégré dans le corps semiconducteur (20, 26), le circuit étant sensible à des changements de capacité du condensateur.

3. Transducteur selon l'une des revendications 1 ou 2, caractérisé en ce que le diaphragme (24) est contigu au corps (20, 26), et en ce que la membrane conductrice (38) est métallique et isolée du corps.

4. Procédé de fabrication d'un transducteur de pression capacitif, caractérisé en ce qu'il comprend les étapes successives suivantes:

(1) doper une partie (24) d'un substrate semiconducteur (20) d'un matériau d'un premier type de conductivité au moyen d'un matériau du type de conductivité opposé dans une région dans laquelle le transducteur doit être formé;

(2) faire croître une couche épitaxiale (26) de matériau semiconducteur du premier type de conductivité sur le substrat (20) pour fournir une structure dans laquelle la partie dopée (24) est une couche enterrée;

(3) traiter la structure pour former une connexion électrique (28) entre la couche enterrée (24) et la surface externe de la couche épitaxiale (26);

(4) déposer une couche isolante (34, 36) sur chacune des surfaces externes de la structure dans la région dans laquelle le transducteur doit être formé;

(5) déposer une couche de métal (38) sur la couche isolante (34) qui est contiguë à la couche épitaxiale (26);

(6) graver plusieurs ouvertures (40) à travers la couche de métal (38) et la couche isolante (34) sousjacente dans la région où le transducteur doit être formé;

(7) attaquer la couche isolante (36) du côté de la structure opposé à la couche de métal (38) pour définir l'étendue du transducteur; et

(8) attaquer la structure par un produit d'attaque pour enlever le matériau semiconducteur de la couche épitaxiale (26) dans la région des ouvertures (40) et du substrat (20) dans la région définie par la partie attaquée de la couche isolante (36) du côté de la structure opposé à la couche de métal (38) pour laisser en place un diaphragme constitué par le matériau de la couche précédemment enterrée (24).

5. Procédé selon la revendication 4, caractérisé en ce que le substrat (20) est constitué de silicium de type N.

6. Procédé selon la revendication 5, caractérisé en ce que le substrat de silicium de type N (20) a une surface principale se trouvant selon le plan (100), en ce que la partie (24) du substrat est dopée au bore, en ce que les couches isolantes (34, 36) sont constituées de nitrure de silicium, en ce qu'un produit d'attaque anisotrope est utilisé au cours de l'étape (8), et en ce que le côté substrat de la structure est ensuite protégé par une couche isolante de passivation (50).

7. Procédé selon l'une quelconque des revendications 4 à 6, caractérisé en ce qu'il comprend en outre les étapes consistant à former d'autres dispositifs semiconducteurs dans le substrat (20) pour produire un circuit intégré dans lequel le transducteur de pression capacitif est intégré.

FIG. 1A

FIG. 1B

FIG. 1C

FIG. 1D

FIG. 1E

FIG. 1F

FIG. 2